# FASCICULE DE BREVET EUROPEEN

(11) **EP 2 177 684 B1**
(45) Date de publication et mention de la délivrance du brevet: **29.08.2012**
(21) Numéro de dépôt: 09356055.5
(22) Date de dépôt: 12.10.2009
(51) Int. Cl.: E04C 2/52, E04B 5/48, E04C 5/16

(54) **Elément de construction, son procédé de fabrication et procédé de réalisation d'un plafond chauffant et/ou refroidissant**
Bauelement, sein Herstellungsverfahren und Umsetzungsverfahren einer Deckenheizung und/oder -kühlung
Construction element, method for manufacturing same and method for producing a heating and/or cooling ceiling

(30) Priorité: 15.10.2008 FR 0805703
(43) Date de publication de la demande: 21.04.2010
(73) Titulaire: Sodimagaz S.A.S., 75009 Paris (FR)
(72) Inventeur: Bel, Alain, 01280 Prevessin-Moens (FR)
(74) Mandataire: Stona, Daniel

(56) Documents cités:
- EP-A- 1 610 064
- DE-A1- 3 420 729
- DE-U1- 20 116 155
- FR-A- 2 859 744
- GB-A- 2 216 562
- US-A- 4 945 704
- US-A1- 2008 245 022

## Description

L'invention concerne un élément de construction, tel qu'une pré-dalle, destiné, notamment, à la réalisation d'un sous-plancher. L'invention se rapporte également à un procédé de fabrication d'un tel élément de construction, à un plafond qu'il permet d'obtenir ainsi qu'à un procédé de réalisation d'un plafond chauffant et/ou refroidissant.

### Arrière-plan de l'invention

Il existe depuis de nombreuses années des planchers chauffants rafraîchissants qui sont réalisés sur un chantier.

Il est également connu d'utiliser ce qu'on appelle un « plafond rayonnant réversible » pour réchauffer ou refroidir une pièce. Un tel plafond, décrit en particulier dans la revue spécialisée « CO2, Le Magazine du confort thermique », n°1, décembre 2006, pp. 37 et 38, est constitué d'une natte capillaire intégrée dans un enduit de plâtre et dans laquelle circule de l'eau.

Un tel système est très intéressant d'un point de vue thermique, mais sa mise en place, délicate, nécessite l'intervention d'un plâtrier et demande en outre beaucoup de temps, ce qui se traduit par des coûts élevés.

Le modèle d'utilisé allemand n° DE 201 16 155 U1 décrit une plaque dans laquelle est noyé un tube rigide 3 destiné à être parcouru par un liquide de chauffage, afin de réaliser un chauffage au sol. Comme cela est indiqué au 2^{ème} paragraphe de la page 7 et visible sur la figure 1 de ce document, cette plaque comporte un évidement 4 non traversant, destiné à laisser accessibles des barres de raccordement 3a en vue de montages ultérieurs.

La demande de brevet allemand n° DE 3420729 concerne une plaque en béton armé préfabriquée, qui peut servir à la réalisation d'un plafond ou d'un sol chauffant. Comme on peut le voir sur la figure 1 de ce document, cette plaque 1 comporte en son sein un tube de chauffage rigide 2 dont l'entrée et la sortie débouchent au niveau d'une extrémité longitudinale amincie de la plaque. Des manchons de soudure 3 permettent le raccordement à des conduites de liaison reliées à des collecteurs d'entrée 5 et de sortie 6, eux-mêmes reliés à un dispositif de chauffage. Comme cela est indiqué au 2^{ème} paragraphe de la page 5 de ce document, après la mise en place et le raccordement de deux plaques adjacentes, l'espace formé par les deux amincissements de ces plaques est comblé par du béton.

Ce système n'est plus utilisable de nos jours, car les normes actuelles de construction imposent qu'un opérateur puisse avoir accès au raccordement pour débrancher les tubes ou fermer une vanne de raccordement, ce qui est évidemment impossible si ce raccordement est noyé dans du béton.

De plus, à la complexité du raccordement des plaques au dispositif de chauffage, qui se fait deux par deux, s'ajoute l'inconvénient que les plaques ne sont pas des pré-dalles, c'est-à-dire qu'elle sont, certes, préfabriquées, mais ce sont des produits finis. Comme cela est mentionné au dernier paragraphe de la page 6 de cette demande de brevet allemand, la surface des plaques doit donc être plane et lisse de façon à pouvoir être directement recouverte par une couche de PVC, un tapis, etc. A cet effet, les plaques sont réalisées au moyen de plusieurs bétons, le béton de la couche supérieure présentant une granulométrie appropriée (cf. page 4, ligne 25).

Le fait que la surface des plaques doit être lisse implique que soient prises de nombreuses précautions, notamment lors de leur transport, pour éviter tout endommagement de cette surface.

Un autre inconvénient est qu'il n'est pas possible de recourir à des écarteurs facilitant le levage des plaques car rien ne doit faire saillie par rapport à la surface de la plaque.

Par ailleurs, la demande de brevet français n° FR 2 859 744 propose un panneau préfabriqué pour la réalisation de parois chauffantes et/ou rafraîchissantes de bâtiment, ce panneau intégrant un tuyau ou serpentin permettant le transport et la distribution d'une énergie thermique et dont les extrémités sont accessibles dans un évidement afin de permettre leur raccordement à d'autres éléments du circuit de distribution de l'agent de chauffage et/ou de rafraîchissement de l'installation, au moyen de raccords appropriés.

### Exposé sommaire de l'invention

Le but majeur de l'invention est de proposer une technique simple, rapide, industrielle et peu coûteuse permettant la mise en place d'un système performant de chauffage ou rafraîchissement/refroidissement d'une pièce.

Selon l'invention, ce but est atteint au moyen d'une pré-dalle comprenant une plaque en béton :
- munie d'une armature ;
- dans laquelle est noyé un serpentin souple apte à permettre la circulation d'un fluide ;
   cette pré-dalle élément de construction étant caractérisée en ce que
- comportant au moins un évidement traversant s'étendant du dessus au dessous de la plaque dans lequel débouchent l'entrée et la sortie du serpentin ;
- l'évidement traversant permet la mise en place d'une gaine technique s'élevant perpendiculairement à la pré-dalle ;
- la longueur de chaque extrémité libre du serpentin est au moins trois fois supérieure à la distance D séparant l'endroit de la paroi où débouche cette extrémité libre (33 ou 34) et le point le plus proche (30) du côté (7) de la plaque (1) le plus proche ; et
- les extrémités libres du serpentin peuvent être enroulées et disposées à l'intérieur de l'évidement traversant.

Ainsi, les inventeurs ont, de façon surprenante, songé à utiliser les techniques traditionnellement mises en oeuvre dans la construction, en particulier le recours à des gaines techniques, en combinant, d'une part, la souplesse d'un serpentin et, d'autre part, l'existence d'un évidement traversant pour obtenir une pré-dalle facile à fabriquer, à transporter et à installer, et rapidement connectable à un édifice en cours de construction.

Ainsi, la pré-dalle selon l'invention a l'avantage de pouvoir être mise en oeuvre pour le chauffage par le plafond d'une pièce.

La pré-dalle selon l'invention peut être fabriquée suivant un procédé selon l'invention comprenant les étapes suivantes :
- on dispose une armature sur une table de coffrage ;
- on place un serpentin sur l'armature ;
- on fixe le serpentin à l'armature ;
- on dispose au moins un cadre destiné à former un évidement sur la table de coffrage ;
- on place les extrémités du serpentin au moins partiellement dans le ou les cadres ;
- on enroule les extrémités libres du serpentin à l'intérieur du ou des cadres ;
- on coule le béton, en évitant le ou les cadres ;
- on laisse l'ensemble durcir et sécher ;
- on décoffre l'ensemble ; et
- on retire le ou les cadres.

La pré-dalle selon l'invention permet donc de réaliser un plafond chauffant ou rafraîchissant/refroidissant.

L'invention a également pour objet un procédé de réalisation d'un plafond chauffant ou refroidissant, comprenant les étapes suivantes :
- on fabrique au moins une pré-dalle selon l'invention ;
- on transporte la pré-dalle sur un chantier ;
- on dépose la pré-dalle sur des murs porteurs ;
- on déroule les extrémités libres du serpentin ;
- on les connecte à des colonnes d'alimentation et de retour de fluide ;
- on met en place une gaine technique dans l'évidement ; et
- on coule un plancher sur l'élément de construction.

Outre sa simplicité et rapidité d'exécution, ce procédé a un avantage supplémentaire : peu importe si la surface supérieure de la pré-dalle selon l'invention est endommagée lors du transport car une dalle en béton va de toute façon être coulée sur elle.

D'autres caractéristiques et avantages de l'invention vont maintenant être décrits en détail dans l'exposé qui suit et qui est donné en référence aux figures annexées qui représentent schématiquement :
- figure 1 : une vue de dessus en perspective d'une pré-dalle selon l'invention ;
- figure 2 : une vue en coupe de la pré-dalle selon la figure 1 ;
- figure 3 : une vue en coupe d'une installation de fabrication de pré-dalles selon l'invention ;
- figure 4 : une vue de dessus d'un sous-plancher selon l'invention composé d'une pluralité de pré-dalles selon l'invention ;
- figure 5 : une partie d'un sous-plancher selon l'invention monté dans un bâtiment ;
- figure 6 : une partie d'un bâtiment montrant le raccordement du sous-plancher de la figure 5 au bâtiment ;
- figure 7 : une pré-dalle selon l'invention en perspective, comportant deux évidements ;
- figure 8 : un détail d'un des évidements de l'élément de la figure 7, montrant l'enroulement du serpentin ; et
- figure 9 : une vue de côté en coupe de la pré-dalle des figures 7 et 8 montrant une cheville de fixation munie d'une vis.

### Exposé détaillé de l'invention

### Élément de construction (pré-dalle)

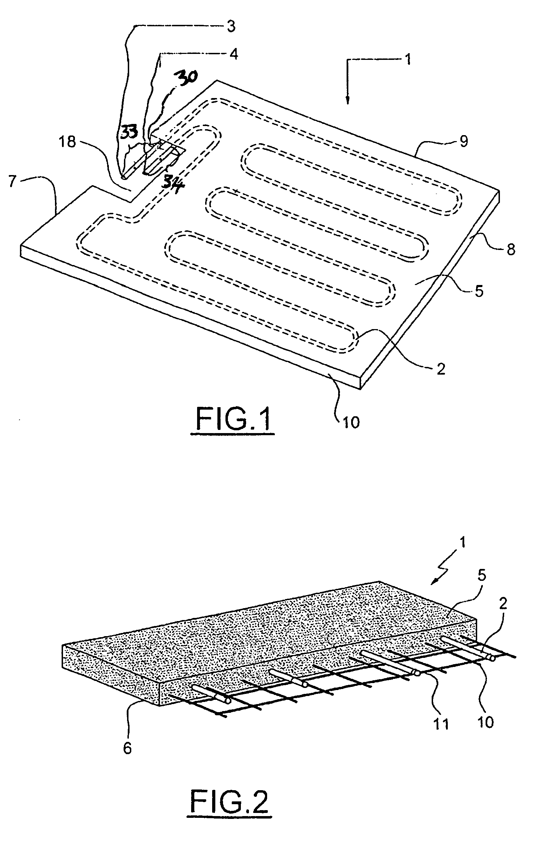

L'élément de construction selon l'invention est représenté en détail sur les figures 1 et 2. Il comprend une plaque 1 de faible épaisseur, généralement en béton et ayant une surface principale globalement rectangulaire. Sa largeur est généralement de 1,5 à 3 m, sa longueur de 3 à 7 m et son épaisseur de 5 à 7 cm.

Au sein de cette plaque 1 se trouve un serpentin souple 2, de préférence un tuyau multicouche en matériaux de synthèse, généralement de type polypropylène ou polyéthylène réticulé ou poly-butène, ayant une entrée 3 et une sortie 4 situées à l'extérieur de la plaque 1.

Comme on peut le voir sur la figure 1, le serpentin 2 part d'un coin de la plaque 1, s'étend d'un côté latéral 7 à l'autre côté latéral 8 de la plaque 1, puis il se retourne sur environ 180 degrés pour revenir vers le premier côté latéral 7 où il se retourne de nouveau sur environ 180 degrés pour revenir vers le deuxième côté latéral 8, et ainsi de suite, de façon à ce qu'il parcoure la plaque 1 d'un côté longitudinal 9 de cette plaque à l'autre 10.

Le parcours du serpentin 2 s'étend ainsi sensiblement sous toute la surface de la plaque 1. Bien entendu, on pourrait tout aussi bien imaginer d'autres parcours, sans sortir du cadre de l'invention.

Les écarts entre 2 ondes du serpentin sont équidistants de sorte à obtenir (lors de l'utilisation comme pré-dalle décrite ci-après) une température la plus uniforme possible en surface de la plaque. Cet écart aussi appelé « pas de pose » est déterminé par la puissance d'émission thermique souhaitée. Ce pas varie généralement de 15 à 35 cm. Les tuyaux se posent en général d'une seule longueur (sans raccord).

Selon l'invention, il est prévu dans la plaque 1 au moins un évidement 18 (figure 1) dans lequel se situent la parties extérieures du serpentin 2, c'est-à-dire son entrée 3 et sa sortie 4.

Le contour de cet évidement 18 est de préférence rectangulaire. L'évidement 18 est traversant, c'est-à-dire qu'il s'étend du dessus au dessous de la plaque 1.

Le rôle de l'évidement 18 est double : il permet d'abord de contenir les extrémités libres 33 et 34 du serpentin 2 et, une fois l'élément de construction mis en place, il peut recevoir une gaine technique contenant, comme on le verra par la suite, les colonnes d'alimentation et de retour de fluide caloporteur.

L'évidement 18 est obtenu au moyen d'un cadre ayant de préférence la même épaisseur que la plaque 1. Le côté supérieur de ce cadre est généralement fermé par un couvercle constitué d'une plaque d'un matériau tel que le polystyrène, pour empêcher, lors du coulage, que l'évidement 18 se remplisse de béton. De façon similaire, le côté inférieur du cadre peut éventuellement également être fermé par un couvercle du même type.

Selon l'invention, la longueur de chaque extrémité libre 33 ou 34 est supérieure à la distance D séparant l'endroit de la paroi où débouche cette extrémité libre et le point le plus proche du côté latéral ou transversal de la plaque 1 le plus proche. Ainsi, sur la figure 1, le côté de la plaque 1 le plus proche des endroits de débouchement est le côté latéral 7 et le point le plus proche est le point 30, à la fois pour l'extrémité libre 33 et l'extrémité libre 34.

Cette caractéristique est importante car elle permet une facilité de raccordement du serpentin à une source de fluide chaud ou froid. Mais elle n'a de sens que combinée au fait que le serpentin est souple, ce qui, d'une part, rend son raccordement effectuable manuellement et, d'autre part, permet de le recourber ou de l'enrouler sur lui-même dans l'évidement, ce qui ne perturbe pas le transport de l'élément de construction, car le serpentin, en se logeant dans l'évidement, ne fait pas ou pratiquement pas saillie hors de la plaque.

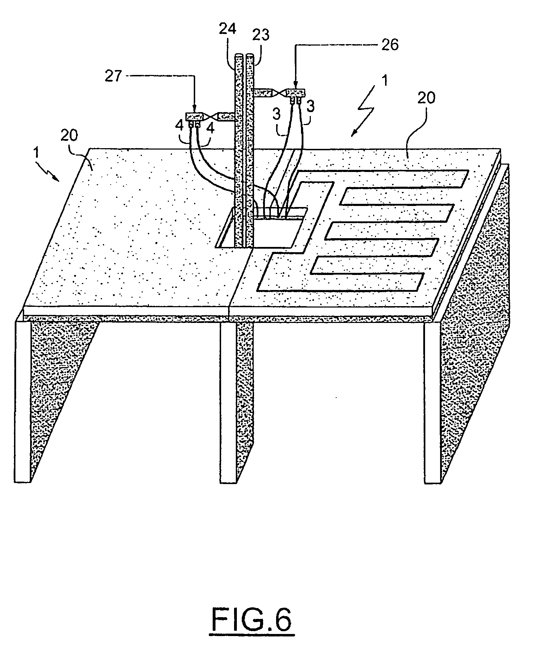

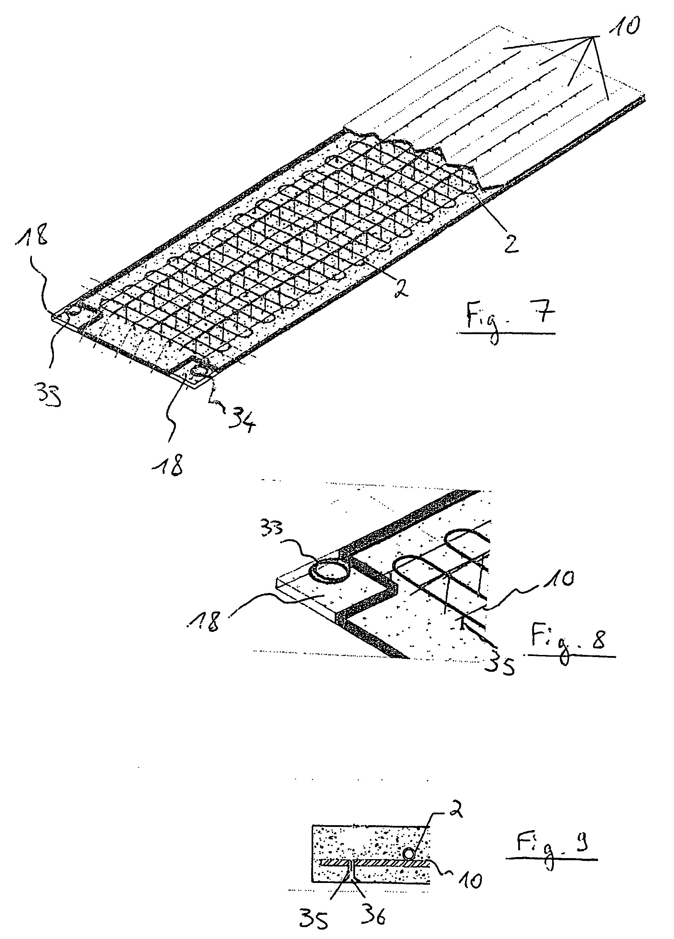

La longueur de chaque extrémité libre 33 ou 34 est au moins trois fois, plus préférablement au moins cinq fois et encore plus préférentiellement au moins dix fois supérieure à la distance D qui lui correspond, comme on peut le voir sur les figures 6 et 8.

Cependant, la longueur maximale du serpentin est limitée physiquement par la perte de charge du fluide caloporteur circulant à l'intérieur du tuyau. Ainsi la longueur maximale est généralement inférieure à 100 m pour une pré-dalle de grande dimension. Le diamètre extérieur du serpentin est généralement d'environ 16 mm. L'épaisseur de la paroi du tuyau est généralement d'environ 1,5 mm et le tuyau peut contenir en général environ 0,133 l de fluide/m. Son poids est en général d'environ 0,072 kg/m.

Comme on peut le voir en particulier sur la figure 1, le plan formé par le parcours du serpentin 2 est sensiblement parallèle aux faces supérieures 5 et inférieure 6 de la plaque 1 et il se situe de préférence dans la partie inférieure de la plaque 1.

Comme cela ressort de la figure 2, cette configuration est facilement obtenue en ligaturant le serpentin à l'armature métallique ou ferraillage composé de barres longitudinales 10 et latérales 11 formant un maillage ou treillis. Dans ce type d'armature, bien connu de l'homme du métier, les extrémités des barres longitudinales 10 et latérales 11 font saillie à l'extérieur de la plaque 1. Il va de soi que l'évidement 18 est dépourvu de barres d'armature.

### Procédé de fabrication

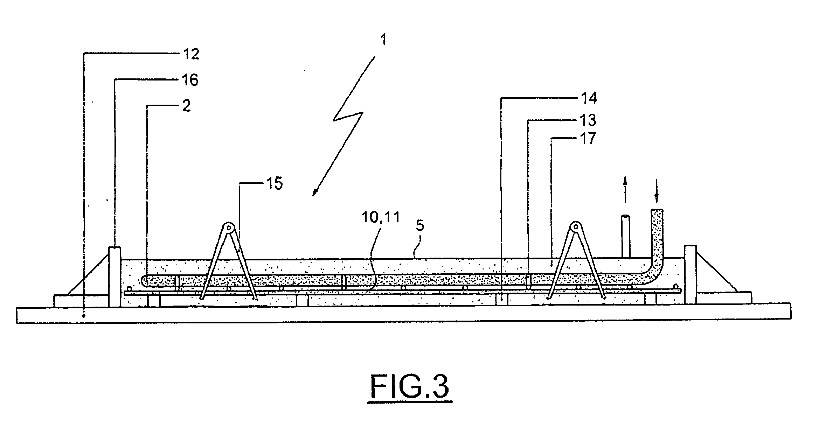

Pour fabriquer l'élément de construction (pré-dalle) selon l'invention, on peut procéder de la manière suivante, illustrée par la figure 3 :
- on dispose une armature formée de barres longitudinales 10 et latérales 11 sur des écarteurs inférieurs 14 reposant sur une table de coffrage 12 qui est une surface plane, généralement métallique, dont les côtés sont munis de parois ou bords 16 faisant saillie vers le haut ;
- on place un serpentin hydraulique 2 sur l'armature ;
- on ligature le serpentin 2 à l'armature à l'aide de colliers 13 ;
- on dispose, un ou deux cadre(s) (non visible(s) sur la figure) destiné(s) à former le ou les évidements 18 ;
- on place au moins partiellement, de préférence totalement, les extrémités 33 et 34 du serpentin 2 dans le ou les cadres(s) ;
- on met en place des écarteurs supérieurs 15, généralement parallèlement les uns aux autres et en étant reliés par une barre ;
- on peut ensuite vérifier l'étanchéité du serpentin 2 par mise sous pression d'air ; si cette étanchéité n'est pas bonne, on y remédie, notamment, en changeant le serpentin ;
- sinon, on coule le béton 17 sur l'ensemble, entre les parois de coffrage 16, en évitant le ou les cadres et en maintenant éventuellement la pression d'air dans le serpentin 2 ;
- après durcissement, on supprime la pression dans le serpentin 2 ;
- après séchage, on enlève le ou les cadres et on décoffre l'élément de construction.

Bien entendu, il est possible de ne supprimer la pression dans le serpentin qu'après la fin du séchage de l'élément de construction.

Généralement, la pression est maintenue pendant le durcissement et séchage à l'aide d'un dispositif d'épreuve à lecture manométrique. Une plage d'épreuve définie entre un minimum de deux bars et un maximum de dix bars est maintenue pendant le séchage.

Il est souhaitable, une fois la mise sous pression du serpentin 2 terminée, de boucher son entrée 3 et sa sortie 4, afin d'éviter la pénétration de béton ou de poussières à l'intérieur de ce serpentin 2. On peut utiliser des bouchons de couleurs différentes (par exemple, rouge et bleu) afin d'indiquer le sens de circulation du fluide caloporteur.

Après la fin du séchage, le serpentin est déconnecté du dispositif d'épreuve et l'élément de construction est décoffré.

Il peut alors être livré sur chantier avec sa référence altimétrique et positionnelle. Grâce aux écarteurs supérieurs 15, il peut facilement être mis en place par grutage suivant le plan du chantier et en fonction de son adresse de référencement.

Il convient de noter que le serpentin 2 étant ligaturé sur l'armature 10,11, il se trouve à peu près au milieu ou dans la partie inférieure de la plaque 1. Une fois fixé à l'armature, ses extrémités libres d'entrée de fluide 33 et de sortie de fluide 34, sont de préférence recourbées ou enroulées à l'intérieur du cadre (ou des cadres) qui est généralement en bois et dans lequel elles débouchent après avoir traversé l'un au moins des côtés verticaux de ce cadre. Ce cadre repose sur la table de coffrage 1 et sa partie supérieure peut être fermée par un couvercle de protection pour éviter que du béton pénètre à l'intérieur du cadre. Le couvercle de protection, par exemple en polystyrène, affleure ou fera saillie par rapport à la face supérieure 5 de la plaque 1. Ainsi, une fois le béton durci, on peut sortir les extrémités 3 et 4 du serpentin 2 en enlevant le couvercle en polystyrène, puis en retirant le (ou les) cadre(s).

Le ou les cadres et dont le ou les évidements 18 qu'ils permettent d'obtenir, est/sont généralement situé(s) sur un côté 7, dans un coin ou au centre d'un côté de l'élément de construction.

Il est préférable que les longueurs des parties du serpentin formant respectivement son entrée 3 et sa sortie 4 soient importantes car ceci, comme on le verra en référence à la figure 6, permettra une connexion aisée à des colonnes d'alimentation (distribution) et d'évacuation (retour) de fluide.

Comme on peut le voir sur la figure 3, les écarteurs supérieurs 15 qui sont destinés au levage de l'élément de construction, font bien saillie par rapport à la face supérieure 5 de la plaque 1.

Selon un mode de réalisation avantageux de l'invention, l'élément de construction comprend des chevilles 35 disposées perpendiculairement au plan formé par la plaque 1. Elles sont de préférence fixées aux barres longitudinales 10 ou latérales 11 de l'armature.

Il est souhaitable de visser à l'intérieur des chevilles 35, avant le coulage du béton, des vis 36 dont la tête affleure avec la face inférieure 6 de la plaque 1.

L'existence des chevilles 35 permettra de fixer aisément des objets, tels qu'un lustre ou des câbles de suspension de panneau insonorisant, au plafond. Il suffira pour cela de retirer les vis 36 en les dévissant et de fixer à leur place la partie supérieure du lustre ou les câbles de suspension du panneau insonorisant.

Ceci permettra en outre d'éviter que l'utilisateur perce malencontreusement le serpentin 2 en voulant fixer le lustre ou les câbles.

Une autre solution avantageuse permettant d'éviter le perçage accidentel du serpentin 2 consiste à disposer sur l'armature, lors de la fabrication de l'élément de construction, avant la mise en place du serpentin 2, une couche de matière plastique colorée qui permettra à l'opérateur d'arrêter son perçage lorsqu'il apercevra des copeaux colorés.

### Procédé de réalisation d'un plafond

L'élément de construction selon l'invention est destiné à être utilisé comme pré-dalle, en particulier pour la réalisation d'un plafond ou d'une séparation entre deux étages.

Ainsi, après avoir fabriqué l'élément de construction, on le transporte sur un chantier, puis on le dépose sur des murs porteurs 19, on déroule les extrémités libres 3,4 du serpentin 2, on les connecte à des colonnes d'alimentation 23 et de retour 24 de fluide caloporteur, on met en place une gaine technique dans l'évidement 18 et on coule ensuite un plancher 20 sur l'élément de construction.

La gaine technique dont il est question ici est généralement constituée par trois parois verticales (perpendiculaires à la pré-dalle), qui descendent depuis l'évidement rectangulaire 18, à la manière d'une cheminée, du plafond au sol, ou bien si la pré-dalle est située entre deux étages, les trois parois verticales s'élèvent d'un côté de la pré-dalle et descendent de l'autre.

Dans de rares cas, lorsque l'évidement n'est pas situé sur un côté de la plaque, mais à l'intérieur de celle-ci, la gaine technique parcourt toute la périphérie intérieure de l'évidement, c'est-à-dire qu'elle comporte quatre parois.

On peut aussi imaginer, sans sortir du cadre de l'invention, un évidement ayant une forme autre que rectangulaire, par exemple circulaire. Dans ce cas, la gaine technique aurait une forme globalement cylindrique.

Après le raccordement, l'évidement 18 est généralement comblé, la plupart du temps en formant une plaque prolongeant en quelque sorte la plaque 1. Ceci ferme donc la gaine technique au niveau de chaque étage (pour éviter la propagation des flammes en cas d'incendie).

Dans le cas d'une gaine technique à trois parois verticales et un évidement 18 situé sur un côté de l'élément de construction selon l'invention, la quatrième paroi est généralement destinée à l'accès par un opérateur au raccordement aux colonnes de distribution ou de retour ou vannes de raccordement à ces dernières. La gaine technique peut donc comprendre une porte ou une ouverture.

Les gaines techniques sont bien connues de l'homme du métier et sont habituellement utilisées, par exemple, pour le raccordement à une conduite d'amenée d'eau, d'évacuation des eaux usées, etc.

L'élément de construction selon l'invention et sa mise en place ont donc l'avantage de pouvoir mettre en oeuvre des techniques déjà connues.

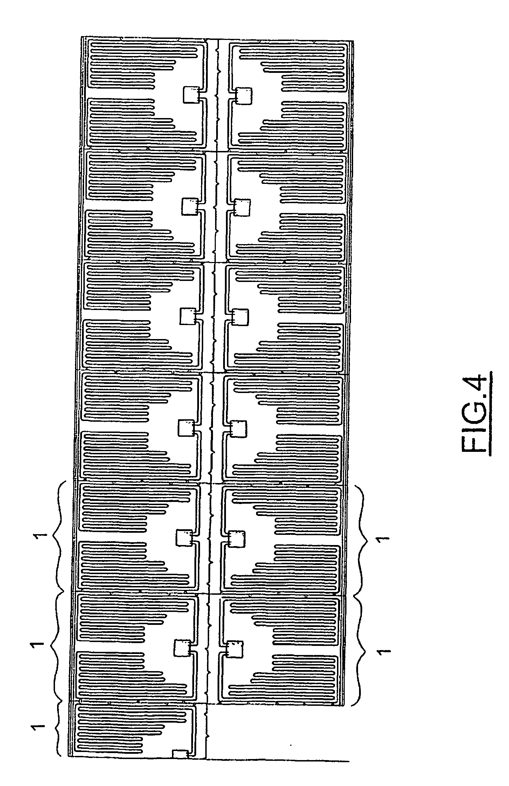

La pré-dalle a été dimensionnée mécaniquement et thermiquement avec une entrée et une sortie d'eau. En disposant côte à côte, comme cela est visible sur la figure 4, deux éléments de construction selon l'invention, de telle manière que leurs côtés longitudinaux respectifs soient parallèles les uns aux autres, on obtient un ensemble pouvant former un plafond.

Les serpentins de chaque pré-dalle peuvent être raccordés selon un schéma « parallèle » ou « série » (par analogie au schéma électrique) aux colonnes de distribution 26/retour 27 par un collecteur double avec ou sans tés de réglage sur le retour et de micro-moteurs afin de réguler la température pré-dalle par pré-dalle sur le départ du collecteur double.

Si on dispose de trois ou plus pré-dalles, on peut procéder de façon similaire, en raccordant les différents serpentins selon le schéma hydraulique en parallèle sur un collecteur double multi-départ.

### Utilisations

L'élément de construction (pré-dalle) selon l'invention est destiné à être utilisé pour chauffer ou refroidir/rafraîchir par le plafond un endroit ou une pièce telle qu'un bureau ou une chambre.

Pour chauffer une pièce, on fait circuler à l'intérieur du serpentin un fluide caloporteur chaud, généralement un liquide, en particulier de l'eau, à une température comprise généralement entre 30 et 35°C en provenance d'une pompe à chaleur, ou de toute autre source de fluide chaud fonctionnant à l'énergie électrique, solaire, fossile, etc.

Pour refroidir une pièce, on fait circuler à l'intérieur du serpentin un fluide caloporteur froid, généralement un liquide, en particulier de l'eau, à une température comprise généralement entre 16 et 20°C. La température du fluide est au dessus de la température du point de rosée du local. Dans l'option rafraîchissement, une sonde de point de rosée à résistance ohmique est fixée sur chaque tuyau d'alimentation de la pré-dalle au niveau du collecteur de départ. Le fluide froid peut provenir soit d'une pompe à chaleur soit d'une nappe phréatique, soit d'un aéro-refroidisseur.

Sur chaque pré-dalle émettrice thermique on peut prévoir, le cas échéant, un isolant en polystyrène expansé sous la forme d'une plaque.

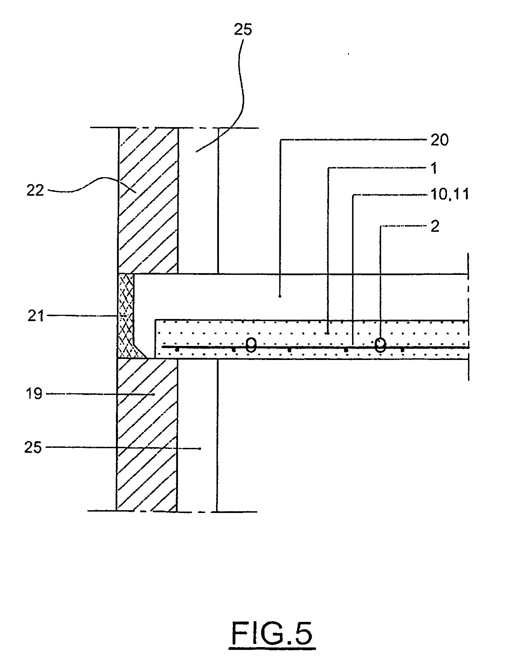

Un exemple d'utilisation de l'élément de construction selon l'invention comme pré-dalle est représenté en partie sur la figure 5. Comme on peut le voir sur cette figure, la pré-dalle 1 repose sur un mur porteur 19. Un plancher 20 généralement en béton a été coulé sur elle. Côté extérieur, une planelle de rive 21 est fixée entre le mur porteur 19 et le mur supérieur 22, afin de constituer une paroi périphérique du plancher d'étage. Côté intérieur, les murs porteur 19 et supérieur 22 comportent un revêtement isolant intérieur 25.

Sur la figure 6, les extrémités libres d'entrée de fluide 33 de deux pré-dalles 1, font saillie hors du plancher en béton 20 et sont reliées à une colonne 23 d'alimentation en fluide caloporteur, par exemple, de l'eau.

De façon similaire, les extrémités libres de sortie de fluide 34 des deux pré-dalles 1 font également saillie hors du plancher en béton 20 et sont reliées à une colonne 24 de retour du fluide caloporteur vers la production d'énergie.

Les colonnes d'alimentation 23 et de retour 24 d'eau sont situées dans une gaine technique placée dans l'évidement 18 de l'une et/ou l'autre des pré-dalles 1. Ceci a l'avantage de permettre d'utiliser une technique traditionnelle dans le chauffage par le sol pour le chauffage par le plafond.

Le réglage ou la régulation de la température dans la pièce peuvent être effectués de façon connue, grâce à des moyens appropriés, telle que des vannes situées entre les extrémités 33 et 34 et les colonnes d'alimentation et de retour respectives 23,24.

De préférence, un serpentin unique est prévu pour chaque pièce.

Le réglage ou la régulation de la température peut être manuel ou automatique, au moyen, par exemple, de sondes de température extérieure et de thermostats individuels pour chaque pièce. Il peut être prévu de gérer la température globalement, pour l'ensemble du bâtiment, ou individuellement, c'est-à-dire pièce par pièce.

La température d'entrée du fluide caloporteur est réglée en fonction de la température extérieure selon une loi prédéfinie. La régulation pièce par pièce est assurée par une sonde d'ambiance qui agit sur l'ouverture ou la fermeture d'une vanne équipée d'un servomoteur électrique ou thermo-électrique.

Cette régulation individuelle n'est pas une nécessité si les charges thermiques sont homogènes d'une pièce à l'autre. Dans ce dernier cas, une régulation de la température de départ du fluide caloporteur en fonction de la température extérieure est suffisante pour obtenir un confort satisfaisant.

## Revendications

1. Pré-dalle comprenant une plaque (1) en béton :
- munie d'une armature (10,11) ;
- dans laquelle est noyé un serpentin souple (2) apte à permettre la circulation d'un fluide ;
cette pré-dalle étant **caractérisée en ce que**:
- comportant au moins un évidement traversant (18) s'étendant du dessus au dessous de la plaque (1) dans lequel débouchent l'entrée (3) et la sortie (4) du serpentin (2) ;
- l'évidement traversant (18) permet la mise en place d'une gaine technique s'élevant perpendiculairement à la pré-dalle ;
- la longueur de chaque extrémité libre (33 ou 34) du serpentin (2) est au moins trois fois supérieure à la distance D séparant l'endroit de la paroi où débouche cette extrémité libre (33 ou 34) et le point le plus proche (30) du côté (7) de la plaque (1) le plus proche ; et
- les extrémités libres (33,34) du serpentin (2) peuvent être enroulées et disposées à l'intérieur de l'évidement traversant(18).

2. Pré-dalle selon la revendication 1, dans laquelle le serpentin (2) est un tuyau multicouche en matériaux de synthèse de type polypropylène ou polyéthylène réticulé ou poly-butène.

3. Pré-dalle selon la revendication 1 ou 2, comprenant en outre des chevilles (35) disposées perpendiculairement au plan formé par la plaque (1).

4. Pré-dalle selon la revendication 3, dans lequel les chevilles (35) sont fixées à une barre d'armature (10 ou 11).

5. Pré-dalle selon la revendication 3 ou 4, comprenant en outre des vis (36) qui sont vissées chacune dans une cheville (35) et dont la tête affleure avec la face inférieure (6) de la plaque (1).

6. Pré-dalle selon l'une des revendications 1 à 5, comprenant deux évidements (18), l'une (33) des extrémités libres (33,34) débouchant dans l'un de ces évidements et l'autre (34) débouchant dans l'autre de ces évidements.

7. Procédé de fabrication d'une pré-dalle selon l'une des revendications 1 à 6, dans lequel :
- on dispose une armature (10,11) sur une table de coffrage (12) ;
- on place un serpentin (2) sur l'armature (10,11);
- on fixe le serpentin (2) à l'armature (10,11) ;
- on dispose au moins un cadre destiné à former un évidement (18) sur la table de coffrage ;
- on place les extrémités (33,34) du serpentin (2) au moins partiellement dans le ou les cadres ;
- on enroule les extrémités libres (3,4) du serpentin (2) à l'intérieur du ou des cadres ;
- on coule le béton, en évitant le ou les cadres ;
- on laisse l'ensemble durcir et sécher ;
- on décoffre l'ensemble ; et
- on retire le ou les cadres.

8. Procédé selon la revendication 7, comprenant en outre une étape d'enroulement des extrémités libres (3,4) du serpentin (2) à l'intérieur du ou des évidement(s) (18) après le retrait du ou des cadres.

9. Procédé de fabrication selon la revendication 7 ou 8, dans lequel, au moins pendant le coulage et le durcissement du matériau dont la plaque (1) doit être constituée, on met l'intérieur du serpentin (2) sous pression d'air.

10. Plafond comprenant au moins une pré-dalle selon l'une des revendications 1 à 6.

11. Procédé de réalisation d'un plafond chauffant ou refroidissant, comprenant les étapes suivantes :
- on fabrique au moins une pré-dalle selon l'une des revendications 1 à 6 ;
- on transporte la pré-dalle sur un chantier ;
- on dépose la pré-dalle sur des murs porteurs (19) ;
- on déroule les extrémités libres (33,34) du serpentin (2) ;
- on les connecte à des colonnes d'alimentation (23) et de retour (24) de fluide ;
- on met en place une gaine technique dans l'évidement (18) s'élevant perpendiculairement à la pré-dalle; et
- on coule un plancher (20) sur la pré-dalle.

12. Procédé selon la revendication 11, dans lequel la pré-dalle selon l'une des revendications 1 à 6 est fabriquée en mettant en oeuvre le procédé de fabrication selon l'une des revendications 7 à 9.

## Claims

1. Pre-cast slab comprising a concrete slab (1):
- equipped with reinforcement (10,11);
- in which is encased a flexible coil (2) able to permit the circulation of a fluid; said pre-cast slab being **characterized in that**
- it includes at least one through recess (18) extending from the top to the bottom of slab (1), in which terminate the inlet (3) and the outlet (4) of the coil (2);
- the trough recess (18) permits the installation of a pipe duct elevating perpendicularly to the pre-cast slab;
- the length of each free extremity (33 or 34) of the coil (2) is at least three times greater than the distance D separating the point on the wall where this free extremity (33 or 34) emerges, and the nearest point (30) of the closest side (7) of the slab (1); and
- the free extremities (33,34) of the coil (2) can be wound up and placed inside the through recess (18).

2. Pre-cast slabaccording to claim 1 in which the coil (2) is a multi-layered tube made of a synthetic material of the polypropylene, cross-linked polyethylene or poly-butene type.

3. Pre-cast slabaccording to claim 1 or 2, also including pins (35) installed perpendicular to the plane formed by the slab (1).

4. Pre-cast slab according to claim 3, in which the pins (35) are attached to a reinforcement bar (10 or 11).

5. Pre-cast slab according to claim 3 or 4, also including screws (36) that are each screwed into a pin (35), the heads of which are flush with the lower face (6) of the slab (1).

6. Pre-cast slab according to one of the claims 1 to 5, including two recesses (18), with one (33) of the free extremities (33,34) terminating in one of these recesses, and the other (34) terminating in the other recess.

7. Manufacturing process for a pre-cast slab according to one of the claims 1 to 6, in which:
- a reinforcement (10,11) is placed on a slab form (12);
- a coil (2) is placed on the reinforcement (10,11);
- the coil (2) is attached to the reinforcement (10,11);
- at least one frame designed to form a recess (18) is placed on the slab form;
- the extremities (33,34) of the coil (2) are placed at least partially in the frame or frames;
- the free extremities (33,34) of the coil (2) are placed inside the frame or frames;
- the concrete is poured while avoiding the frame or frames;
- the assembly is allowed to set and dry;
- the formwork is stripped from the assembly; and
- the frame or frames are removed.

8. Process according to claim 7, also including a step of coiling up the free extremities (3,4) of the coil (2) inside the recess or recesses (18) after removal of the frame or frames.

9. Manufacturing process according to claim 7 or 8, in which, at least during the pouring and hardening of the material of which the slab (1) is comprised, air pressure is applied to the inside of the coil (2).

10. A ceiling including at least one pre-cast slab according to one of the claims 1 to 6.

11. Implementation process for heating or cooling the ceiling including the following steps:
- at least one pre-cast slab is manufactured according to claims 1 to 6;
- the pre-cast slab is transported to the building site;
- the pre-cast slab is placed on load-bearing walls (19);
- the free extremities (33,34) of the coil (2) are unrolled;
- they are connected to fluid supply (23) and return (24) columns;
- a pipe duct elevating perpendicularly to the pre-cast slab is inserted in the recess (18); and
- a floor (20) is poured on the building element.

12. Process according to claim 11, in which the pre-cast slab according to one of claims 1 to 6 is manufactured by implementing the manufacturing process according to one of claims 7 to 9.

## Patentansprüche

1. Fertigplattenbauteil (1) mit einer Platte aus Beton,
- die mit einer Bewehrung (10, 11) ausgestattet ist,
- in der eine geschmeidige Rohrschlange (2) integriert ist, die dazu eingerichtet ist, den Durchfluss eines Fluids zu gestatten,
wobei dieses Fertigplattenbauteil **dadurch gekennzeichnet ist, dass**
- es wenigstens eine Durchbruchsausnehmung (18) aufweist, die sich von einer Seite der Platte (1) auf die andere Seite erstreckt und in der der Einlass (3) sowie der Auslass (4) der Rohrschlange (2) münden,
- die Durchbruchsausnehmung (18) das Anordnen eines Betriebskanals gestattet, der sich rechtwinklig zu dem Fertigplattenbauteil erstreckt,
- die Länge jedes freien Endes (33 oder 34) der Rohrschlange (2) wenigstens dreimal größer als der Abstand D ist, der den Bereich der Wand, an dem die freien Enden (33 oder 34) münden, und den nächstliegenden Punkt (30) des Randes (7) der nächstliegenden Platte (1) trennt, und
- die freien Enden (33, 34) der Rohrschlange (2) aufgerollt sowie im Innern der Durchbruchsausnehmung (18) angeordnet sein können.

2. Fertigplattenbauteil nach Anspruch 1, bei dem die Rohrschlange (2) ein mehrlagiger Schlauch aus einem synthetischen Material nach Art eines vernetzten Polypropylen oder vernetzten Polyethylen oder Polybuthen ist.

3. Fertigplattenbauteil nach Anspruch 1 oder 2, das weiterhin über Bolzen (35) verfügt, die rechtwinklig zu der durch die Platte (1) gebildeten Ebene ausgerichtet sind.

4. Fertigplattenbauteil nach Anspruch 3, bei dem die Bolzen (35) an einem Stab der Bewehrung (10 oder 11) angebracht sind.

5. Fertigplattenbauteil nach Anspruch 3 oder 4, das weiterhin über Schrauben (36) verfügt, die jeweils in einen Bolzen (35) eingeschraubt sind und deren Kopf sich auf einem Niveau mit der Unterseite (6) der Platte (1) befindet.

6. Fertigplattenbauteil nach einem der Ansprüche 1 bis 5 mit zwei Ausnehmungen (18), wobei eines (33) der freien Enden (33, 34) in eine der Ausnehmungen und das andere (34) in die andere Ausnehmung mündet.

7. Verfahren zum Herstellen eines Fertigplattenbauteils nach einem der Ansprüche 1 bis 6, bei dem
- eine Bewehrung (10, 11) auf einem Verschalungsbrett (12) angeordnet wird,
- auf der Bewehrung (10, 11) eine Rohrleitung (2) aufgelegt wird,
- die Rohrleitung (2) an der Bewehrung (10, 11) befestigt wird,
- wenigstens ein Rahmenteil angeordnet wird, das dazu bestimmt ist, eine Ausnehmung (18) auf dem Verschalungsbrett zu bilden,
- die Enden (33, 34) der Rohrleitung (2) wenigstens teilweise in dem oder jedem Rahmenteil angeordnet werden,
- die freien Enden (3, 4) der Rohrleitung (2) innenseitig des oder jedes Rahmenteiles eingerollt werden,
- Beton unter Aussparen des oder jedes Rahmenteiles gegossen wird,
- die Einheit ausgehärtet und getrocknet gelassen wird,
- die Einheit entschalt wird und
- das oder jedes Rahmenteil entfernt wird.

8. Verfahren nach Anspruch 7, das weiterhin nach dem Entfernen des oder jedes Rahmenteiles einen Schritt des Einrollens der freien Enden (3, 4) der Rohrleitung (2) auf die Innenseite der oder jeder Ausnehmung (18) aufweist.

9. Verfahren zum Herstellen nach Anspruch 7 oder 8, bei dem wenigstens während des Gießens und des Aushärtens des Materials, aus dem die Platte (1) gebildet werden muss, die Innenseite der Rohrleitung (2) mit Druckluft beaufschlagt wird.

10. Boden mit wenigstens einem Fertigplattenbauteil nach einem der Ansprüche 1 bis 6.

11. Verfahren zum Bereitstellen eines heizenden oder kühlenden Bodens, das die folgenden Schritte aufweist:
- Herstellen wenigstens eines Fertigplattenbauteiles nach einem der Ansprüche 1 bis 6,
- Transportieren des Fertigplattenbauteiles zu einer Baustelle,
- Anordnen des Fertigplattenbauteiles an Tragestrukturen (19),
- Ausrollen der freien Enden (33, 34) der Rohrleitung (2),
- Anschließen derselben an Fluidzuführ- (23) und
- rücklaufleitungen (24),
- Anordnen eines Betriebskanals in der Ausnehmung (18), der sich rechtwinklig zu dem Fertigplattenbauteil erstreckt, und
- Gießen eines Fußbodens (20) auf das Fertigplattenbauteil.

12. Verfahren nach Anspruch 11, bei dem das Fertigplattenbauteil nach einem der Ansprüche 1 bis 6 durch Ausführen des Verfahrens zum Herstellen nach einem der Ansprüche 7 bis 9 hergestellt wird.
